# DEMANDE DE BREVET EUROPEEN

(11) **EP 2 460 955 A1**
(43) Date de publication de la demande: **06.06.2012**
(21) Numéro de dépôt: 11350006.0
(22) Date de dépôt: 30.11.2011
(51) Int. Cl.: E05B 17/10, E05B 65/20, B60Q 1/26, B60Q 1/32

(54) **Véhicule à ouvrant latéral**

(30) Priorité: 02.12.2010 FR 1004684
(71) Demandeur: Mia Electric, 79140 Cerisay (FR)
(72) Inventeur: Rochard, Dominique, 49310 St. Hilaire du Bois (FR); Largeau, Patrick, 49300 Cholet (FR); Guenak, Murat, 38448 Wolfsburg (DE); Wilkie, David, 10121 Turin (IT)
(74) Mandataire: Tournel, Jean Louis

(57) **Abrégé**

L'invention a pour objet un véhicule automobile équipé d'une serrure 1 comprenant un mécanisme 3 d'actionnement d'un verrou qui coopère avec une pièce 4 d'accrochage porté par cet ouvrant étant caractérisé en ce que la serrure présente une source de lumière faisant fonction de répéteur de changement de directions.

## Description

L'invention se rapporte à un véhicule automobile à ouvrant latéral avec une serrure.

Pour accéder à l'intérieur d'un véhicule, des ouvertures dans la carrosserie sont fermées par des ouvrants qui sont fixés sur la structure porteuse. Ces ouvrants sont pivotants autour d'un axe ou coulissants ou reliés par un mécanisme complexe (porte papillon) au châssis. Ces ouvrants sont équipés d'une serrure. Cette serrure se compose d'un mécanisme d'actionnement d'un verrou ou pêne venant en prise avec une pièce complémentaire. Cette serrure a une première fonction qui est le maintien de la porte en position fermée auquel s'ajoute une fonction de sécurité pour interdire l'ouverture de la porte à un tiers non habilité.

La porte d'un véhicule est souvent constituée d'une structure résistante en forme de cadre sur laquelle structure résistante est fixée une peau galbée qui sera ensuite peinte. Cette peau participe à l'enveloppe esthétique externe du véhicule et constitue la face extérieure de l'ouvrant.

Sur la face interne de cette structure de porte en forme de cadre est fixée une paroi interne qui est amovible pour permettre l'accès à l'espace préservé entre la peau et la paroi amovible. Le cadre sur lequel sont fixés la peau et la paroi amovible est épais en sorte de délimiter un volume utilisable. Dans ce volume vient se loger, par exemple un mécanisme de déplacement d'une vitre mais également le mécanisme d'actionnement de la serrure. La partie complémentaire de la serrure qui est appelée gâche est fixée sur le dormant.

Les serrures devenant motorisées notamment en ce qui concerne la condamnation, l'énergie doit être acheminée par câble à l'intérieur de l'ouvrant pour alimenter un électroaimant qui verrouille ou déverrouille le pêne. Ceci pose des contraintes et peut poser des soucis de fiabilité.

Le câble électrique provenant indirectement de la batterie doit traverser la caisse du véhicule pour ensuite traverser la portière étant entendue qu'elle est mobile. Par conséquence, le câble d'alimentation à cet endroit du passage vers l'intérieur de la porte va subir des contraintes lors de la manoeuvre de l'ouvrant qui peuvent conduire à un cisaillement du câble électrique.

Egalement, compte tenu de la présence souvent d'une vitre coulissant dans l'ouvrant, l'implantation du mécanisme d'actionnement de la serrure n'est pas toujours aisée. Il faut en outre tenir compte de la présence de ce mécanisme pour concevoir la structure porteuse de l'ouvrant afin de prévoir les points de fixation de ce mécanisme.

Il est connu DE-A-196.49.377 de monter le mécanisme de serrure sur le dormant du véhicule.

Pour indiquer que le véhicule est fermé et/ou surveillé, on utilise souvent une source de lumière parfois intégrée au niveau du bord supérieur de la portière ou au niveau du tableau de bord. Ce signal lumineux est à l'intérieur du véhicule et il est visible pour une personne regardant à l'intérieur du véhicule.

Il est connu de faire appel à des répéteurs de feux de changement de direction placés sur les ailes latérales du véhicule ou intégrés aux rétroviseurs.

Malheureusement les rétroviseurs sont souvent vandalisés et en outre comme ils sont en projection par rapport à la carrosserie (hors gabarit) ils subissent des coups accidentels qui nécessitent parfois le remplacement de ces répéteurs.

L'invention se propose d'apporter une solution.

A cet effet, l'invention se rapporte à un véhicule automobile comportant un ouvrant d'ouverture latérale équipé d'une serrure comprenant un mécanisme d'actionnement d'un verrou qui coopère avec une pièce d'accrochage la dite pièce d'accrochage étant portée par l'ouvrant et le mécanisme d'actionnement étant porté par une structure fixe du véhicule, ce véhicule étant caractérisé en ce que la serrure présente une source de lumière visible depuis l'extérieur reliée électriquement à une commande des feux de changement de direction pour constituer un répéteur de feux de changement de directions.

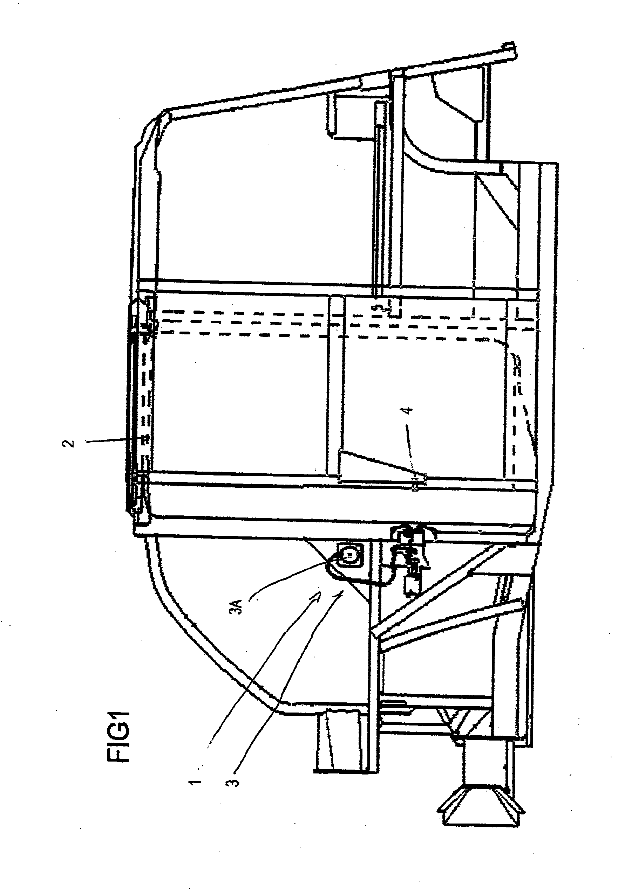

L'invention sera bien comprise à l'aide de la description ci après faite à titre d'exemple non limitatif en regard du dessin qui représente/
FIG 1 : Vue latérale d'un véhicule

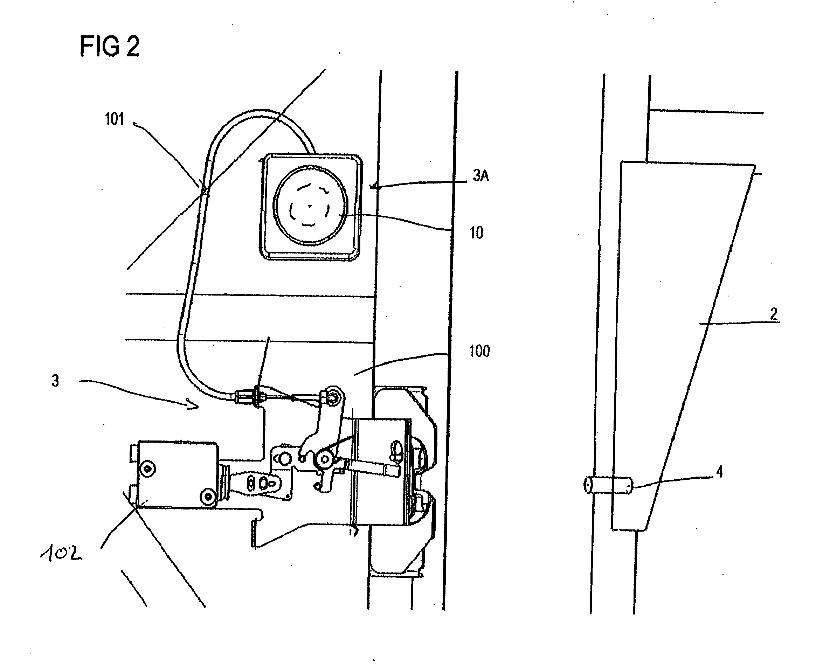

FIG 2 : Un détail de la figure 1

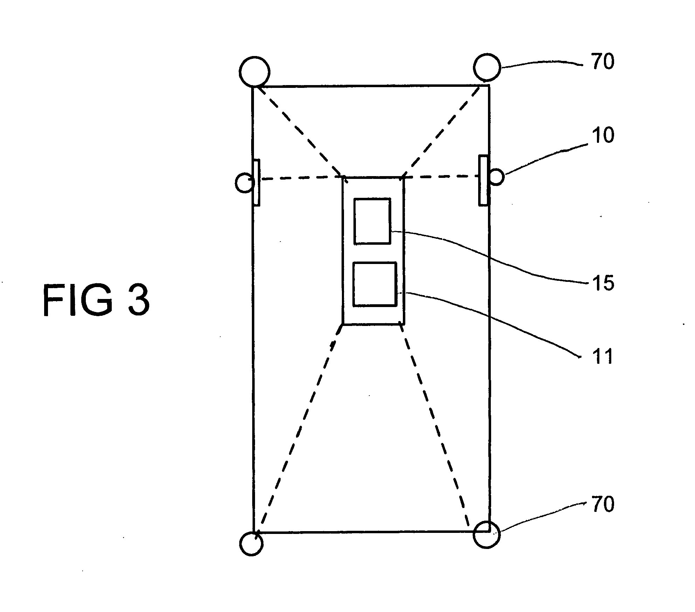

FIG 3 : un schéma de principe de la commande electrique

En se reportant au dessin, on voit une serrure 1 destinée à immobiliser un ouvrant 2 d'un véhicule automobile.

Cette serrure comprend un mécanisme 3 d'actionnement d'un verrou qui coopère avec une pièce 4 d'accrochage en sorte d'immobiliser l'ouvrant en position fermée.

Cet ouvrant 2 peut être une portière obturant une ouverture latérale.

Le mouvement de cet ouvrant peut être du type battant ou du type coulissant.

Par verrou, on comprendra le pêne et le moyen d'immobilisation du pêne.

La pièce 4 d'accrochage est encore appelée gâche.

Avantageusement, la pièce 4 d'accrochage est portée par l'ouvrant 2, le mécanisme 3 d'actionnement du verrou étant porté par une partie fixe du véhicule.

Cette solution présente un intérêt en ce sens que l'ouvrant devient plus simple à réaliser. En effet, il n'est plus nécessaire de prendre en compte l'encombrement du coffre de la serrure, des points de fixation dudit coffre et de son épaisseur. L'épaisseur de la portière peut être réduite et donc le volume habitable plus grand. Le galbe de la porte peut être plus prononcé. Le poids de l'ouvrant est également réduit.

La pièce 4 d'accrochage peut venir se fixer sur le champ de l'ouvrant. L'espace disponible dans l'ouvrant reste alors totalement disponible et peut être utilisé pour loger des renforts de porte en cas d'accident dont la configuration géométrique desdits renforts sera plus simple

En second lieu lorsque la serrure est motorisée, le câble électrique qui alimente la serrure n'a pas besoin de pénétrer dans la porte et il n'est pas soumis aux contraintes liées aux mouvements d'ouverture et de fermeture dudit ouvrant car il va cheminer uniquement sur une structure fixe.

Le mécanisme 3 d'actionnement comprend un moyen 3A de manoeuvre mécanique tel un bouton poussoir ou une poignée. Ce moyen de manoeuvre est porté par une partie fixe du véhicule. Ce moyen 3A de manoeuvre peut être déporté, la commande du pêne se faisant par exemple au moyen d'une transmission à câble. Le mécanisme d'actionnement de la serrure est par exemple logé dans un coffre de protection.

Avantageusement, la serrure et, de préférence le moyen de manoeuvre, présente ou loge une source 10 de lumière (ampoule à filament ou led) visible extérieurement. Cette source de lumière est destinée à être vue de l'extérieur et apparait sur la paroi latérale du véhicule. Le corps qui protège la source traverse donc la carrosserie ou est appliqué sur la carrosserie et les câbles d'alimentation de la source traversent cette carrosserie. Cette source est protégée par un dôme.

Cette source de lumière présente au moins deux applications.

Dans une première application, cette source lumière 10 est actionnée conjointement aux feux 70 de changement de direction et constitue un répéteur de signal de direction.

Dans une seconde application, cette source de lumière 10 est actionnée temporairement lors de la commande de condamnation et/ou dé condamnation de la serrure. Un moyen de temporisation permet de maintenir l'alimentation de cette source de lumière le temps que le porteur repère son véhicule et actionne la poignée (le moyen de manoeuvre) et ouvre la porte, par exemple pendant une durée de dix secondes. Dans cette fonction, la source de lumière est un indicateur visuel pour la localisation du véhicule et du bouton de commande.

Dans une troisième forme de réalisation, la même source de lumière est actionnée par la commande 11 de changement de direction et par la commande 15 de condamnation de la serrure.

Lorsque cette lampe est intégrée dans le bouton poussoir de l'ouverture mécanique, cela évite de percer la carrosserie pour y implanter un répéteur de direction. Le bouton poussoir présente donc une fenêtre translucide ou bien coulisse dans un manchon lumineux.

Comme cela a été indiqué auparavant, l'alimentation électrique de cette source lumineuse ne transite plus par l'ouvrant et s'avère donc plus facile à fiabilisé.

Egalement, en incorporant la source lumineuse au niveau de la serrure, on évite les inconvénients de la localisation des répéteurs de changement de direction situés souvent sur les rétroviseurs qui sont très souvent sujet à destruction par choc ou vandalisme. On supprime les cisaillements lors de la manoeuvre de l'ouvrant, les problèmes d'étanchéité.

Ensuite, en posant la serrure, on pose en même temps le répéteur de feux.

On fait une seule découpe dans la carrosserie pour le bouton poussoir qui outre sa fonction de commande d'ouverture sera un répéteur de feux et un moyen pour localiser son véhicule la nuit.

L'ouvrant ne portant qu'une pièce de faible encombrement, il est facile de la positionner à tous niveau alors qu'auparavant ce n'était pas possible. Il est ainsi possible d'utiliser des ouvrants totalement transparent car la partie encombrante du mécanisme de la serrure est dissimulée dans le dormant. L'ouvrant transparent peut être porté par un cadre de faible dimension transversale, ce cadre ne portant que la gâche qui, souvent, dans les véhicules consiste en une tige portant une tête, le pêne venant s'accrocher sur cette tige.

Dans l'exemple représenté, on voit que le mécanisme d'actionnement est porté par une platine 100.Le pêne est actionné par un bouton 3A de commande qui déporté utilise une transmission 101, ici un câble, pour la commande du pêne. Sur la partie gauche on voit un actionneur 102 qui est le moyen de condamnation de la serrure.

Ainsi non seulement l'ouvrant sera plus simple, moins lourd, la fiabilité de l'alimentation de la serrure sera augmentée.

L'intégration dans un bouton poussoir d'une source de lumière permet de fixer la source de lumière sur une partie fixe du corps du bouton poussoir et d'utiliser la partie mobile comme actionneur de la serrure. Cette partie mobile présentera une première course qui déclenchera une ouverture électrique et une course plus longue qui agira sur la commande mécanique.

L'ouvrant est de type coulissant et la pièce d'accrochage est placée sur le bord avant de l'ouvrant. La serrure avec son mécanisme et sa source de lumière sont donc positionnées vers l'avant du véhicule ce qui permet une utilisation comme répéteur de feux de changements de direction.

En déportant le bouton poussoir par rapport au corps de la serrure, on peut positionner ce bouton poussoir dans une zone où le feu de changement de direction sera visible et également le corps de la cellule ne sera pas localisable car éloigné du bouton poussoir ce qui rend plus difficile le vol du véhicule.

Cette faculté de déporter le bouton de commande est très appréciable pour des véhicules de petite taille type véhicule électrique car ces répéteurs de feux doivent être positionnés à un hauteur définie par la législation.

## Revendications

1. Véhicule comportant un ouvrant d'ouverture latérale équipé d'une serrure 1 comprenant un mécanisme 3 d'actionnement d'un verrou qui coopère avec une pièce 4 d'accrochage la dite pièce 4 étant portée par l'ouvrant et le mécanisme d'actionnement 3 étant porté par une structure fixe du véhicule, ce véhicule étant **caractérisé en ce que** la serrure présente une source 10 de lumière visible depuis l'extérieur reliée électriquement à une commande des feux de changement de direction pour constituer un répéteur de feux de changement de direction.

2. Véhicule selon la revendication 1 **caractérisé en ce que** la serrure est motorisée pour sa condamnation/décondamnation et la source 10 de lumière est alimentée temporairement lors de la commande de condamnation/décondamnation de la serrure pour constituer un indicateur visuel pour la localisation du véhicule.

3. Véhicule selon la revendication 1 ou 2 **caractérisé en ce que** la serrure comprend un moyen 3A de manoeuvre de l'ouverture lequel moyen de manoeuvre loge la source de lumière.

4. Véhicule selon la revendication 2 ou 3 **caractérisé en ce que** la source de lumière est commune à l'indicateur visuel et à la commande de changements de direction.

5. Véhicule selon la revendication 3 ou 4 **caractérisé en ce que** la source 10 de lumière est logée dans un bouton poussoir 3A

6. Véhicule selon la revendication 5 **caractérisé en ce que** le bouton poussoir est déporté du corps de la serrure logeant le mécanisme d'actionnement.

7. Véhicule selon la revendication 5 **caractérisé en ce que** le bouton poussoir présente une fenêtre translucide.

8. Véhicule selon la revendication 5 **caractérisé en ce que** la source de lumière logée dans le bouton poussoir est montée sur une partie fixe.

9. Véhicule selon l'une quelconque des revendications précédentes **caractérisé en ce que** l'ouvrant est de type coulissant.

10. Véhicule selon la revendication 9 **caractérisé en ce que** la pièce d'accrochage est placée sur le bord avant de l'ouvrant en sorte que le mécanisme d'actionnement soit localisé vers l'avant du véhicule.
